# EUROPEAN PATENT APPLICATION

(11) **EP 1 286 256 A2**
(43) Date of publication of application: **26.02.2003**
(21) Application number: 02255266.5
(22) Date of filing: 29.07.2002
(51) Int. Cl.: G06F 3/13, G06F 3/16

(54) **Method and apparatus for image data processing capable of performing a high speed processing using a risc and an AGP**

(30) Priority: 31.07.2001 JP 2001232625
(71) Applicant: Ricoh Company, Tokyo 143-8555 (JP)
(72) Inventor: Tanaka, Satoru, c/o Ricoh Company Ltd, Ohta-Ku, Tokyo 143-8555 (JP)
(74) Representative: Leeming, John Gerard

(57) **Abstract**

An integrated circuit includes an engine interface, a chip set interface, and a data floe controller. The engine interface interfaces with an engine which includes a scanner and a plotter. The chip set interface interfaces with a chip set of a CPU. The data flow controller selects one of first, second, and third data flows. In the first data flow, scanner image data scanned by the scanner and which is input through the engine interface is output as plotter data to the engine interface. In the second data flow, the scanner image data is output to the chip set interface. In the third data flow, image data input through the chip set interface is output as plotter data to the engine interface.

## Description

The present invention relates to a method and apparatus for image data processing, and more particularly to a method and apparatus for image data processing that is capable of performing a high speed data processing using a reduced instruction set computer and an accelerated graphic port.

Conventionally, an image forming apparatus such as a copying machine, a printer, and the like is provided with a controller including an ASIC (application-specific integrated circuit) and a CPU (central processing unit) and which is connected to an engine, and it performs an image data processing operation with this controller.

In a copying machine, for example, a controller is provided with an ASIC having a plurality of hardware elements for executing an image processing operation, and the ASIC is connected to an engine of the copying machine with a PCI (peripheral component interconnection) bus interface. The controller further includes a CPU which is connected to the ASIC. With this configuration, the copying operation is executed under the control of the CPU. That is, the controller controls an image rendering operation.

To improve the performance of the copying machine, it is easily possible to exchange the controller with a faster controller.

The interface of the CPU is usually opened to the public in the past, but it is not in a today's RISC (reduced instruction set computer) type general-purposed CPU. Therefore, the ASIC cannot be connected directly to the RISC CPU but through a specific chip set. As a result, the full potential performance of the RISC CPU cannot be used.

More specifically, when the RISC CPU is connected to an external apparatus through a specific chip set, the PCI bus interface is used. However, the PCI bus interface connected with the chip set generates a very low performance and is not preferable to the high speed image forming apparatus such as the printer, the copying machine, and the like.

Therefore, when a RISC CPU of which interface is not opened to the public is used, it becomes an important issue to perform the data exchange between the chip set of the RISC CPU and the engine at an extremely high speed.

A recent multi-function type apparatus makes a single CPU to handle every multiple function, unlike a conventional multi-function machine which is provided with a plurality of control boards for a plurality of functions. In such an apparatus, it becomes an important issue to resolve the above-mentioned performance reduction with respect to the RISC CPU.

This patent specification describes a novel integrated circuit for image forming. In one example, a novel integrated circuit includes an engine interface, a chip set interface, and a data flow controller. The engine interface is configured to interface with an engine which includes a scanner and a plotter. The chip set interface is configured to interface with a chip set of a CPU. The data flow controller is configured to select one of first, second, and third data flows. In the first data flow, scanner image data scanned by the scanner and which is input through the engine interface is output as plotter data to the engine interface. In the second data flow, the scanner image data is output to the chip set interface. In the third data flow, image data input through the chip set interface is output as plotter data to the engine interface.

The above-mentioned integrated circuit may further include a memory interface configured to interface with a memory for storing image data. In this case, the data flow controller outputs image data input through one of the engine interface and the chip set interface to the memory interface. After that, the data flow controller reads the image data through the memory interface and outputs the read image data to one of the engine interface and the chip set interface.

The memory interface may include a RAM interface and a hard disk interface, and the data flow controller uses one of the RAM interface and the hard disk interface when performing an input and output of image data through the memory interface.

The above-mentioned integrated circuit may further include a reversible data compressor and de-compressor configured to perform a reversible data compression and decompression relative to image data. In this case, the reversible data compressor and de-compressor compresses image data when the image data is output through the memory interface and de-compresses compressed image data when the compressed image data is input through the memory interface.

The chip set interface may be an accelerated graphic port and the accelerated graphic port is connected to a north bridge of the chip set of the CPU, and the engine interface may be a PCI interface including a PCI bus and the PCI bus is connected to the engine.

The engine may one of a black and white plotter, a one-drum color plotter, a four-drum color plotter, a copy engine, and a facsimile engine, each of which includes a PCI interface.

This patent specification further describes a novel image data processing method. In one example, a novel image data processing method includes the steps of providing an engine interface for interfacing an engine which includes a scanner and a plotter, providing a chip set interface for interfacing a chip set of a CPU, and providing a controller for selecting one of first, second, and third data flows. In the first data flow, scanner image data scanned by the scanner and which is input through the engine interface is output as plotter data to the engine interface. In the second data flow, the scanner image data is output to the chip set interface. In the third data flow, image data input through the chip set interface is output as plotter data to the engine interface.

The above-mentioned image data processing method may further include the steps of providing a memory interface for interfacing a memory for storing image data. In this case, image data input through one of the engine interface and the chip set interface is output to the memory interface, and the image data read through the memory interface is output to one of the engine interface and the chip set interface.

The memory interface may include a RAM interface and a hard disk interface, and one of the RAM interface and the hard disk interface is used when image data is input or output through the memory interface.

The above-mentioned image data processing method may further include the steps of providing a reversible data compressor and de-compressor configured to reversibly encode and compress image data when the image data is output through the memory interface and to decode and de-compress the compressed image data when the compressed image data is input through the memory interface.

The chip set interface may an accelerated graphic port and the accelerated graphic port is connected to a north bridge of the chip set of the CPU, and the engine interface may be a PCI interface including a PCI bus and the PCI bus is connected to the engine.

The engine may be one of a black and white plotter, a one-drum color plotter, a four-drum color plotter, a copy engine, and a facsimile engine, each of which includes a PCI interface.

This patent specification further describes a novel image forming apparatus. In one example, this novel image forming apparatus includes an engine including a scanner and a plotter, a CPU, and a controller. The controller is configured to be connected to the engine and the CPU, and includes an integrated circuit for image data processing. This integrated circuit includes an engine interface, a chip set interface, and a data flow controller. The engine interface is configured to interface with the engine. The chip set interface is configured to interface with a chip set of a CPU. The data flow controller is configured to select one of first, second, and third data flows. In the first data flow, scanner image data scanned by the scanner and which is input through the engine interface is output as plotter data to the engine interface. In the second data flow, the scanner image data is output to the chip set interface. In the third data flow, image data input through the chip set interface is output as plotter data to the engine interface.

The integrated circuit further may include a memory interface configured to interface with a memory for storing image data. In this case, the data flow controller outputs image data input through one of the engine interface and the chip set interface to the memory interface. After that, the data flow controller reads the image data through the memory interface and outputs the read image data to one of the engine interface and the chip set interface.

The memory interface may include a RAM interface and a hard disk interface, and the data flow controller may use one of the RAM interface and the hard disk interface when performing an input and output of image data through the memory interface.

The integrated circuit further may include a reversible data compressor and de-compressor configured to perform a reversible data compression and de-compression relative to image data. In this case, the reversible data compressor and de-compressor compresses image data when the image data is output through the memory interface and de-compresses compressed image data when the compressed image data is input through the memory interface.

The chip set interface may be an accelerated graphic port and the accelerated graphic port is connected to a north bridge of the chip set of the CPU, and the engine interface may be a PCI interface including a PCI bus and the PCI bus is connected to the engine.

The engine may be one of a black and white plotter, a one-drum color plotter, a four-drum color plotter, a copy engine, and a facsimile engine, each of which includes a PCI interface.

This patent specification further described a novel image forming method. In one example, this novel image forming method includes the steps of interfacing an engine which includes a scanner and a plotter with an engine interface and interfacing a chip set of a CPU with a chip set interface. The novel image forming method further include the step of selecting one of first, second, and third data flows. In the first data flow, scanner image data scanned by the scanner and which is input through the engine interface is output as plotter data to the engine interface. In the second data flow, the scanner image data is output to the chip set interface. In the third data flow, image data input through the chip set interface is output as plotter data to the engine interface.

The above-mentioned image data processing method may further include the steps of interfacing a memory for storing image data with a memory interface and outputting image data input through one of the engine interface and the chip set interface to the memory interface. The image data processing method may further include the step of reading the image data through the memory interface and outputting the image data to one of the engine interface and the chip set interface.

The memory interface may include a RAM interface and a hard disk interface, and one of the RAM interface and the hard disk interface is used when image data is input or output through the memory interface.

The above-mentioned image data processing method may further include the steps of performing a reversible data compression relative to image data when the image data is output through the memory interface and performing a decompression the compressed image data when the compressed image data is input through the memory interface.

The chip set interface may be an accelerated graphic port and the accelerated graphic port is connected to a north bridge of the chip set of the CPU, and the engine interface may be a PCI interface including a PCI bus and the PCI bus is connected to the engine.

The engine may be one of a black and white plotter, a one-drum color plotter, a four-drum color plotter, a copy engine, and a facsimile engine, each of which includes a PCI interface.

A more complete appreciation of the disclosure and many of the attendant advantages thereof will be readily obtained as the same becomes better understood by reference to the following detailed description when considered in connection with the accompanying drawings, wherein:
Fig. 1 is a block diagram of a printer according to a preferred embodiment;
Fig. 2 is a block diagram of an ASIC used in the printer shown in Fig. 1;
Fig. 3 is a block diagram of a CONFIG included in the ASIC of Fig. 2;
Fig. 4 is a block diagram of a DMAC space base register arranged in an INTREG included in the ASIC of Fig. 2;
Fig. 5 is an illustration for explaining interrelationship of memory maps among a PCI, the ASIC, and a CPU shown in Fig. 1;
Fig. 6 is an illustration for explaining a PCI memory space of an engine shown in Fig. 1;
Figs. 7A and 7B are illustrations for explaining an operation timing of the engine;
Fig. 8 is an illustration for explaining a basic timing of a PCI transfer;
Fig. 9 is a block diagram of a one-drum color plotter applied in place of the engine in Fig. 1;
Fig. 10 is a block diagram of a four-drum color plotter applied in place of the engine in Fig. 1;
Fig. 11 is a block diagram of a color scanner applied in place of the engine in Fig. 1;
Fig. 12 is a software block diagram of a multi-function digital apparatus according to another preferred embodiment;
Fig. 13 is a hardware block diagram of the multi-function digital apparatus of Fig. 12;
Fig. 14 is a block diagram of an ASIC used in the multi-function digital apparatus of Fig. 12; and
Figs. 15 - 17 are block diagrams for explaining three patterns of image data flows caused by the multi-function digital apparatus of Fig. 12.

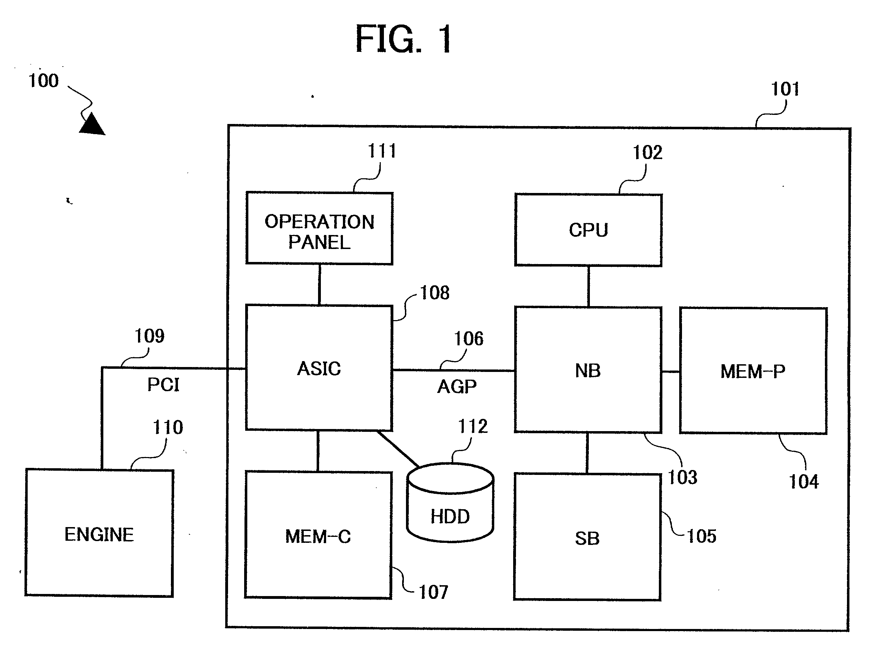

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, particularly to Fig. 1, a description is made for a printer 100 according to a preferred embodiment of the present invention. Fig. 1 shows in diagrammatic form an exemplary structure of the printer 100. As shown in Fig. 1, the printer 100 includes a controller 101, a PCI (peripheral component interconnection) bus cable 109, and an engine 110. The controller 101 controls the entire operations of the printer 100, including an image rendering operation, communications, and an operation for handling data input by an operator through an operation panel 111. The engine 110 is a printer engine connectable to a PCI (peripheral component interconnection) bus. This printer engine may be a black and white plotter, a one-drum color plotter, or a four-drum color plotter, for example. As an alternative to the printer engine, the engine 110 may be a scanner or a facsimile unit, for example. In addition to one of these engine, the engine 110 includes image processing units (not shown) such as an error diffusion processor, a gamma converter, and the like.

The controller 101 includes a CPU (central processing unit) 102, a north bridge (NB) 103, a system memory (MEM-P) 104, a south bridge (SB) 105, an accelerated graphics port (AGP) 106, a local memory (MEM-C) 107, an ASIC (application-specific integrated circuit) 108, the operation panel 111, and a hard disc drive (HDD) 112.

The CPU 102 performs a total control of the printer, and is provided with a specific chip set of the NB 103, the MEM-P 104, and the SB 105. Here, it is noted that the interface of the CPU 102 is not opened to the public. Therefore, the CPU 102 can be connected to other equipment only through the above-mentioned specific chip set.

The NB 103 is a bridge for connecting the CPU 102 to the MEM-P 104, the SB 105, and the AGP 106. The MEM-P 104 is used as an image rendering memory for a printer, for example. The SB 105 is a bridge for connecting the NB 103 to various devices (not shown) such as a ROM (read only memory), PCI (peripheral component interconnection) devices, peripheral devices, etc.

The MEM-C 107 is used as an image buffer for copying and a coding buffer. The ASIC 108 is an integrated circuit designed specifically for an image processing, including a hardware configuration dedicated to the image processing application. The ASIC 108 is also used as a bridge for connecting the AGP 106, the MEM-C 107, the PCI 109, the operation panel 111, and the HDD 112 to each other.

The operation panel 111 allows the operator to enter data and indicates operator guidance. The HDD 112 stores image data, programs, font data, form data, etc.

The AGP 106 is a bus interface for performing a high speed graphic operation with a graphic accelerator card and which directly accesses at a high throughput to the system memory so as to improve the processing speed of the graphic accelerator card.

The AGP 106 is used as an interface between the NB 103 and the ASIC 108 although the AGP 106 is originally designed for a use in smoothly displaying a three-dimensional image. That is, since the interface of the CPU 102 is not opened to the public, the ASIC 108 is connected to the CPU 102 via the NB 103 with the AGP 106. Normally, the PCI bus may be considered as the interface between the ASIC 108 and the CPU side. However, the PCI bus will reduce in performance of the communications between them and therefore the AGP 106 is extended to this use, instead of the PCI bus.

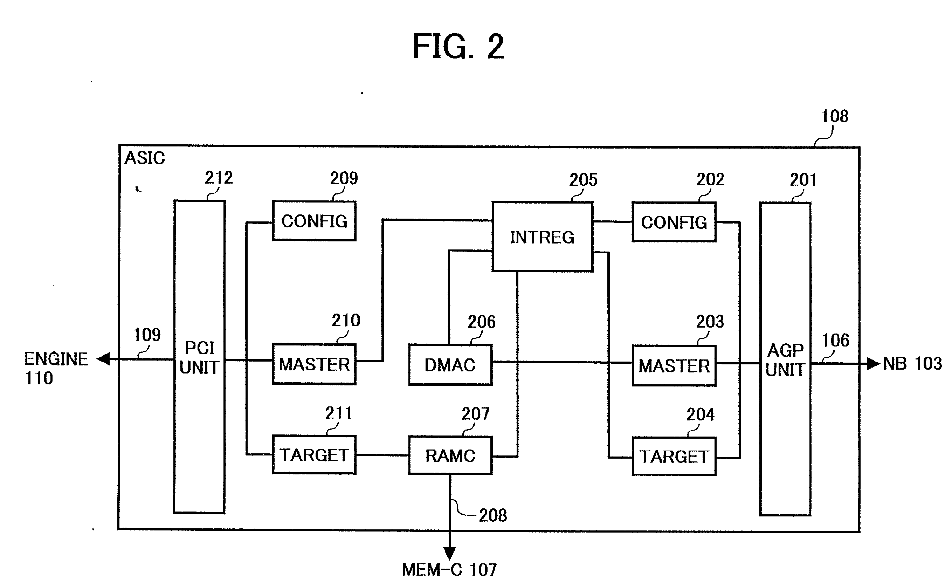

Fig. 2 is a block diagram of the ASIC 108 shown in Fig. 1. As shown in Fig. 2, the ASIC 108 includes an AGP (accelerated graphics port) unit 201, a configuration register (CONFIG) 202, a master unit (MASTER) 203, a target unit (TARGET) 204 an internal register (INTREG) 205, a DMA (direct memory access) controller (DMAC) 206, a RAM (random access memory) controller (RAMC) 207, a configuration register (CONFIG) 209, a master unit (MASTER) 210, a target unit (TARGET) 211, and a PCI (peripheral component interconnection) unit (PCI) 212.

The AGP unit 201 is an interface to the specific chip set for executing bus protocols of the AGP bus 106 connecting the AGP unit 201 to the NB 103. The CONFIG 202 is a PCI configuration register for the AGP bus 106. The MASTER 203 executes bus master functions of the AGP bus 106. The TARGET 204 executes PCI target functions included in the AGP bus 106.

The INTREG 205 is used when each components of the ASIC 108 operates its function. The DMAC 206 executes a DMA (direct memory access) transfer to the local memory MEM-C 107.

The RAMC 207 controls the MEM-C 107. The CONFIG 209 is a PCI configuration register for the PCI bus 109. The MASTER 210 executes bus master functions of the PCI 109. The TARGET 211 executes PCI target functions included in the PCI 109. The PCI unit 212 is an engine interface for executing bus protocols of the PCI bus 109 connecting the PCI unit 212 to the engine 110.

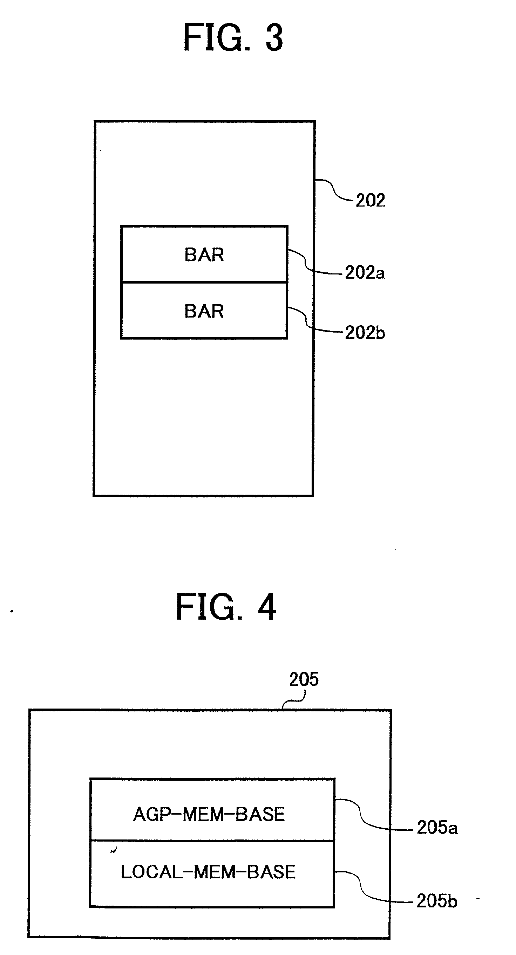

Fig. 3 shows an exemplary internal structure of the CONFIG 202 which is the configuration register for the AGP 106, as shown in Fig. 2. As shown in Fig. 3, the CONFIG 202 includes base address registers (BAR) 202a and 202b. The BAR 202a is the base address register for mapping the local memory MEM-C 107 and the BAR 202b is the base address register for mapping a space for an I/O (input and output) of the PCI.

Fig. 4 shows DMAC space base registers included in the INTREG 205. As shown in Fig. 4, the DMAC space base registers are an AGP-MEM-BASE 205a and a LOCAL-MEM-BASE 205b. The AGP-MEM-BASE 205a specifies base addresses at which the AGP space of the NB 103 is mapped and allows the DMAC 206 to obtain addresses to access. The LOCAL-MEM-BASE 205b specifies base addresses at which the memory space of the ASIC 108 is mapped and allows the DMAC 206 to obtain addresses to access.

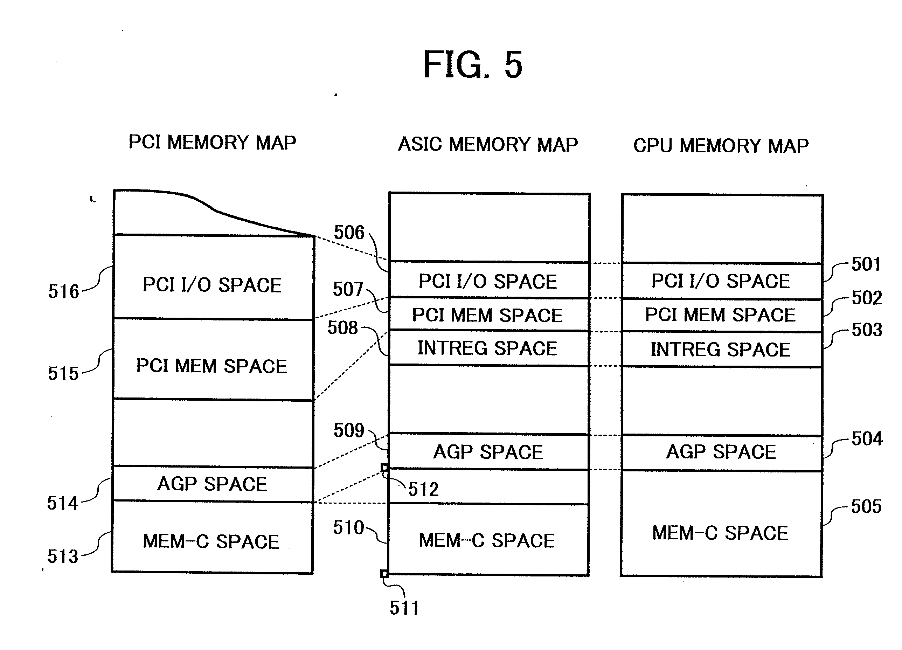

Referring to Fig. 5, interrelationships among the memory maps of the PCI 109, the ASIC 108, and the CPU 102 are explained. In Fig. 5, a PCI I/O space 501 is an PCI I/O space of the ASIC 108 as seen from the CPU 102. Likewise, a PCI MEM space 502 and an INTREG space 503 are a PCI MEM space of the ASIC 108 and an INTREG space of the ASIC 108, respectively, both as seen from the CPU 102. An AGP space 504 is a memory space accessible by the NB 103 with the AGP bus protocols. A MEM-P 505 is a memory space managed by the NB 103.

A PCI I/O space 506 is a PCI I/O space of the ASIC 108. Likewise, a PCI MEM space 507 is a PCI MEM space of the ASIC 108, an internal register space 508 is an internal register space of the ASIC 108. An AGP space 509 is a memory space accessible by the ASIC 108 with the AGP bus protocols and a MEM-C space 510 is a memory space managed by the ASIC 108. A base 511 is a first address of the MEM-C 510 and a base 512 is a first address of the AGP space 509.

A MEM-C 513 is a memory space of the MEM-C 107 accessible by the engine 110. An AGP space 514 is an AGP space accessible by the engine 110. A PCI MEM space 515 is a PCI MEM space accessed by the CPU 102 through the ASIC 108. A PCI I/O space 516 is a PCI I/O space accessed by the CPU 102 through the ASIC 108.

As shown in Fig. 5, the PCI I/O spaces 516, 506, and 501 correspond with each other. The PCI MEM spaces 515, 508, and 502 correspond with each other. The INTREG spaces 508 and 503 correspond with each other. The AGP spaces 514, 509, and 504 correspond with each other. The MEM-C spaces 513, 510, and 505 correspond with each other.

Next, an exemplary procedure of an operation performed by the printer 100 of Fig. 1. When a power is applied to the printer 100, the CPU 102 starts a BIOS (basic input output system) (not shown) beyond the SB 105 to perform initializations of various components including the NB 103 and the SB 105. During the initializations, the CPU 102 accesses the CONFIG 202 of the ASIC 108 via the AGP 106 to determine values of the BARs 202a and 202b so as to initialize the ASIC 108 that operates as an AGP device.

After a completion of the initializations, the CPU 102 can access the INTREG 205 of the ASIC 108. In other words, a mapping address of the AGP space in the ASIC 108 is specified in the AGP-MEM-BASE 205a of the INTREG 205 of the ASIC 108 and a mapping address of the local memory MEM-C 107 directly managed by the ASIC 108 is specified in the LOCAL-MEM-BASE 205b of the INTREG 205 of the ASIC 108.

That is, an address of the base 512 shown in Fig. 5 is specified in the AGP-MEM-BASE 205a and an address of the base 511 is specified in the LOCAL-MEM-BASE 205b. With a performance of mapping, the memory map shown in Fig. 5 is obtained.

Thereby, the system memory is located at the position of the MEM-P 505 and the AGP space 504 is located on the system memory, as seen from the CPU 102. The AGP 504 is specified in the register of the NB 103. Accordingly, registers mapped in the PCI space are seen in upper addresses.

The INTREG space 503, the PCI MEM space 502, and the PCI I/O space 501 are specified in the BAR 202a of the CONFIG 202 of the PCI. The local memory MEM-C 107 managed by the ASIC 108 is specified in the BAR 202b of the CONFIG 202 and is accessed by the CPU 102 through the PCI.

The base address specified in the BAR 202a indicates the first address of the INTREG space 508, and the PCI MEM space 507 and the PCI I/O space 506 are automatically determined with respective offsets relative to the base address.

When the CPU 102 write-accesses the PCI MEM space 507, the write access by the CPU 102 is posted so that the CPU 102 is released from the write access and can address the next task. Then, the write access is executed relative to the PCI MEM space 515 of the PCI 109. Likewise, the write access relative to the PCI I/O space 506 is executed relative to the PCI I/O space 516.

When the CPU 102 read-accesses the PCI MEM space 502, the read-access by the CPU 102 is converted into an AGP access by the NB 103 and the PCI MEM space 507 of the ASIC 108 is read-accessed.

The ASIC 108 accesses the PCI MEM space 515 of the PCI 109 but tentatively returns a retry signal in response to the AGP access by the CPU 102 since it takes relatively a long time until the data is read. Upon receiving the retry signal, the NB 103 repeats the read access. When the ASIC 108 reads data from the PCI 109, the data is ready and is sent to the NB 103. The NB 103 transfers the data to the CPU 102. The transaction then ends.

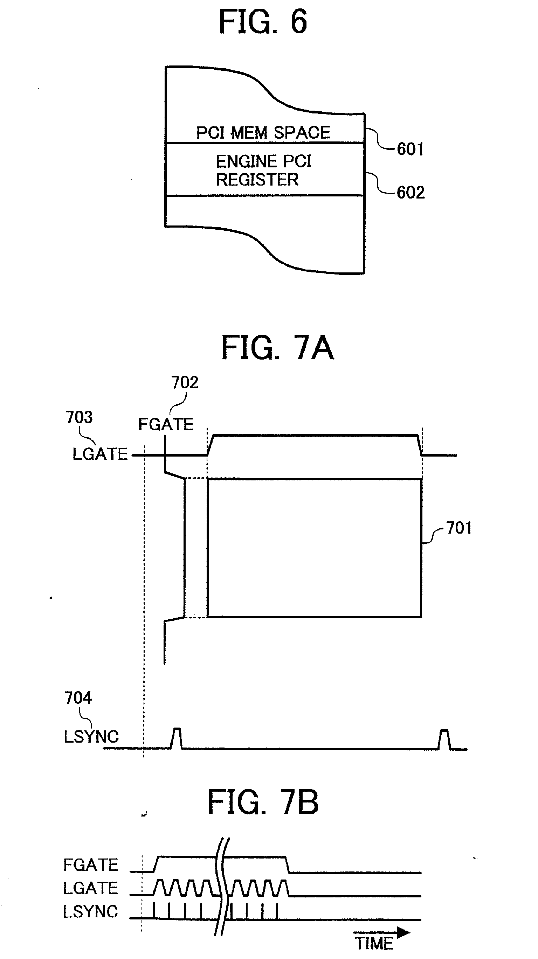

Fig. 6 shows a PCI MEM space 601 and an engine PCI space 602. The PCI MEM space 601 is a PCI MEM space accessed by the CPU 102 through the ASIC 108 and the engine PCI register 602 is an engine PCI register mapped in the PCI MEM space which is accessed by the CPU 102 through the ASIC 108. The engine 110 has an engine CONFIG register. A base address of the engine CONFIG register is mapped at an arbitrary address in the PCI MEM space 515. With this base address, the engine PCI register 602 can be accessed.

For an access by the engine 100, a CONFIG register 209 is provided to the PCI 109 side of the ASIC 108. More specifically, there are a plurality of base registers for respectively accessing the AGP space 504 of the NB 103 and the memory MEM-C space 510 managed by the ASIC 108 and respectively specifying an input address of an image input DMAC of the ASIC 108 and an output address of an image output DMAC of the ASIC 108.

The above-described processes are executed in the initializations.

Upon a completion of the memory mapping, the memory map shown in Fig. 5 is obtained and the CPU 102 can access the memories according to this memory map. Also, the engine 110 accesses the memories according to the memory map shown in Fig. 6. The engine 110 also performs diagnostic checks upon power-on and awaits for the memory mapping performed by the CPU 102. For this, the engine 110 can communicate with the CPU 102 after the initialization.

The controller 101 notifies the operation panel 111 of a message indicative of a print ready status and is turned into an idle status to wait for data from a host, upon a completion of software initialization.

The ASIC 108 is provided with an interface for making an electrical connection to a host of a network, IEEE1394, or USB and, when receiving data from the host, the ASIC 108 in turn interprets the receiving data to render an image on the MEM-P 104. Upon a completion of rendering an image, the ASIC 108 sends a command to the engine 110 to request that the engine 110 takes over the rendered image.

The CPU 102 manipulates the internal register of the NB 103 to rewrite a data table in the memory to make the data of the MEM-P 104 seen as a space of the AGP 504 so that the engine 110 sees the data of the MEM-P 104 as the data in the AGP space 514. The engine 110 receives the first address of a buffer where a rendered image exists, and initiates the DMAC included in the engine 110 to read out the image in the MEM-P 505 through the AGP 514. At this time, the ASIC 108 executes the target operation relative to the PCI 109 and the master operation relative to the AGP 106. The engine 110 reads out the image in synchronism with a clock signal generated therein.

Fig. 7 is an illustration for explaining an operation of the engine 110. In Fig. 7, reference numeral 701 denotes a recording sheet size determined by main scanning and sub-scanning operations. A FGATE 702 is a signal representing an effective area of the sub-scanning operation relative to the recording sheet size 701 and a LGATE 703 represents an effective area of the main scanning operation relative to the recording sheet size 701. An LSYNC 704 represents a synchronization signal asserted at the beginning of the main scanning operation.

Thus, in response to the recording sheet size 701, the engine 110 provides the FGATE 702 for representing the effective area of the sub-scanning operation, the LGATE 703 for representing the effective area of the main scanning operation, and the LSYNC 704 for representing the start time of each main scanning operation.

Upon receiving a print command, the engine 110 feeds the recording sheet and, at the same time, generates the FGATE 702. The engine 110 start loading an image into a buffer thereof before a few pulses of the LSYNC 704 by the time the FGATE 702 is asserted.

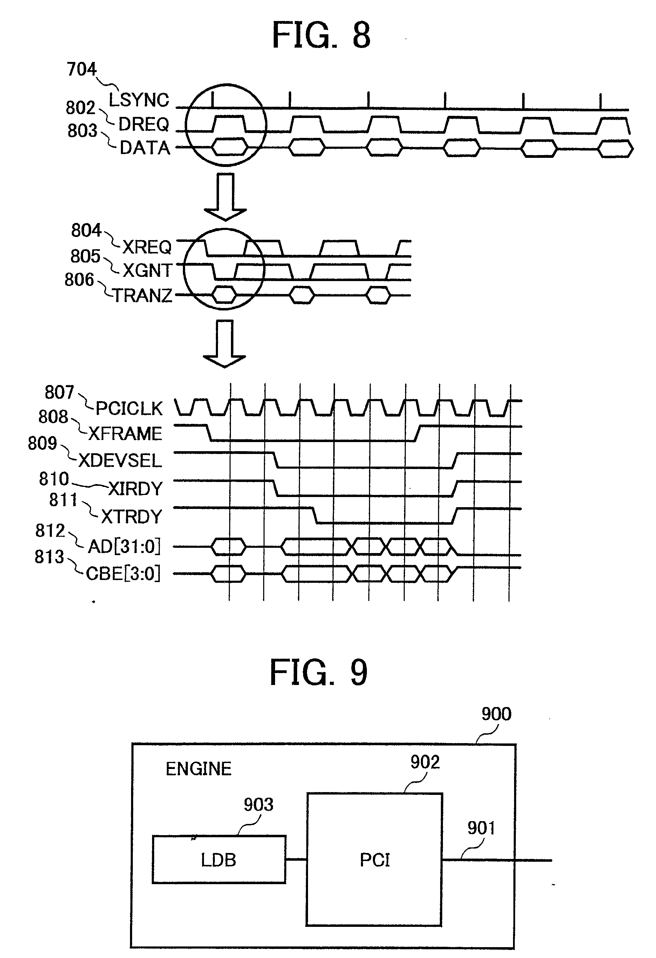

Fig. 8 is time charts for explaining basic timing of signals in the PCI transfer operation. In Fig. 8, a relationship among the LSYNC 704, a DREQ 802, and a DATA 803 are shown. The DREQ 802 is a data request signal and the DATA 803 is a data transfer signal for transferring a line of data. Fig. 8 also shows a relationship among an XREQ 804, an XGNT 805, and a TRNZ 806. The XREQ 804 is a bus request signal for requesting the PCI bus. The XGNT 805 is a bus grant signal for granting the PCI bus. The TRANZ 806 is a bus transaction signal of the PCI bus.

Further in Fig. 8, a PCICLK 807 is a PCI basic clock signal and an XFRAME 808 is a PCI frame (FRAME) signal. An XDEVSEL 809 is a PCI device selection (DEVSEL) signal, an XIRDY 810 is a PCI IRDY signal, and an XTRDY 811 is a PCI TRDY signal. An AD[31:0] 812 is a PCI address and data bus signal and a CBE[3:0] 813 is a PCI command/byte enable signal.

As shown in Fig. 8, the data transfer request signal, the DREQ 802, is asserted at a rising edge of the LSYNC 704 and a line of data, the DATA 803, is then transferred. Thus, the DATA 803 is transferred in synchronism with the LSYNC 704.

When the XREQ 804 is asserted on the PCI 109 and the use of the bus is consequently granted, the XGNT 805 is asserted and the PCI transaction, the TRANZ 806, is performed. The PCI transactions are repeated so that the transfer for one line of data is completed. The TRANZ 806 is a burst transfer.

The PCI signals are synchronized with a rising edge of the PCICLK 807. When the use of the bus is granted, the engine 110 playing as the bus master asserts the XFRAME 808 and, at the same time, generates the address AD[31:0] 812 and the command CBE[3:0] 813. If the address AD[31:0] 812 generated by the engine 110 hits the base address register (BAR) in the configuration (CONFIG) register of the ASIC 108, the ASIC 108 asserts the XDEVSEL 809.

When the engine 110 is ready to receive data, the engine 110 confirms that the XDEVSEL 809 is asserted and then asserts the XIRDY 810 to notify the target, ASIC 108, that the engine 110 is ready to receive data. When the data in response to the command CBE[3:0] 813 is ready, the ASIC 108 asserts the XTRDY 811 and sends data on the bus.

After that, the ASIC 108 transfers one data per clock signal in synchronism with the PCICLK 807. One clock signal before the last data, the engine 110 playing as the bus master negates the XFRAME 808 to indicate that the next data is the last data in the transaction. Upon a completion of the data transfer, the ASIC 108 negates the XDEVSEL 809 and the XTRDY 811 and the engine 110 negates the XIRDY 810. Thereby, the process ends.

Fig. 9 shows a block diagram of an engine 900 which can replace the engine 110 in Fig. 1. The engine 900 is the engine of a one-drum type color plotter and includes a PCI (peripheral component interconnection) unit 902 and an LDB (laser diode beam) unit 903. The PCI unit 902 executes a data transfer with the bus protocols of a PCI 901 using the DMA. The LDB unit 903 performs an image forming operation for rendering an image on a drum with a laser beam.

Since the engine 900 is the one-drum type color plotter, a full color image is separated into yellow (Y), magenta (M), cyan (C), and black (BK) color images which are sequentially formed on one drum and a recording sheet is brought to contact the drum four times so as to receive one full color image. Inside the engine 900, a color toner is selected from among the Y, M, C, and BK color toners in response to the color of the separated color image in process.

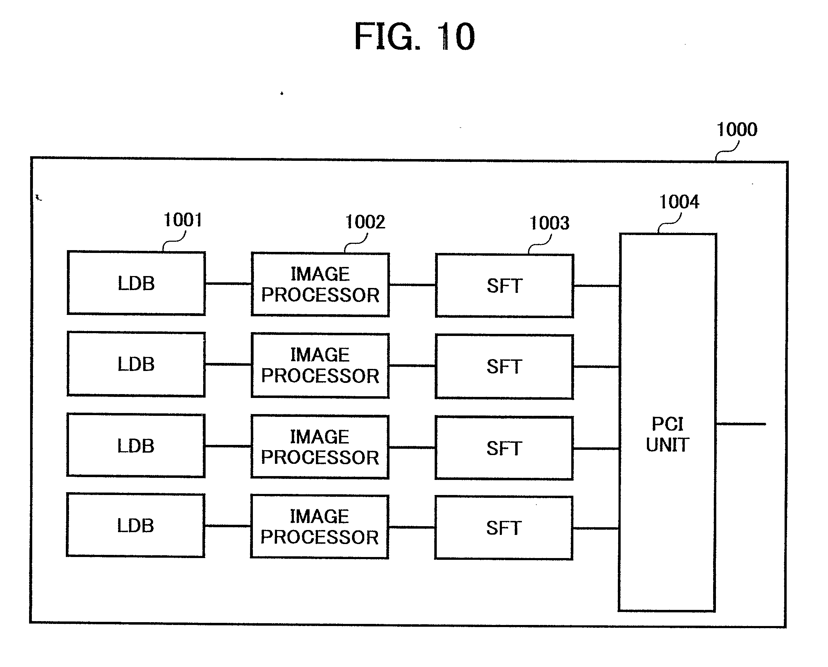

Fig. 10 shows a block diagram of an engine 1000 which can replace the engine 110 in Fig. 1. The engine 1000 is the engine of a four-drum type color plotter and includes four drum units corresponding to the Y, M, C, and BK color toners. Each drum unit includes a drum (not shown) and its associated components (not shown), a DMAC (direct memory access controller) unit (not shown), an LDB (laser diode beam) 1001, an image processor 1002, and an image shift processor (SFT) 1003. The engine 1000 further includes a PCI (peripheral component interconnection) unit 1004 which is electrically connected to the SFT 1003.

Each drum unit reads out necessary image data by accessing an address designated by a command in the memory space of the ASIC 108 playing as the target a time period of a few line cycles before each unit outputs an image.

The image processor 1002 converts an obtained analog signal into a digital signal and executes various signal processing operations including a shading correction, an MTF (modulation transfer function), and a a (gamma) correction. The SFT 1003 executes an image shift operation and an image cut operation.

Each drum unit handles the corresponding color and outputs an image plane of the image with respect to the corresponding color. When the sequential image transfers are performed in an order of Y, M, C, and BK from a first drum positioned at a place closest to a recording sheet container and onward, the DMAC of the Y color reads out one line of data in the main scanning direction from the designated address of the ASIC 108.

The DMACs provided for the four colors on a one-to-one basis are included in the PCI unit 1004 and are arbitrated on demand to sequentially transfer the image data. The transfer of the image data for each color is performed in a burst unit in accordance with the timing of Fig. 8. The operations of the four drum units for the Y, M, C, and BK colors, however, are not synchronized with each other and each of them generates its own data transfer request as necessary. Fig. 8 is the time chart of the data transfer for one color and therefore the burst transfers of the Y, M, C, and BK colors are in turn executed on the PCI bus during the time the PCI bus is most busy.

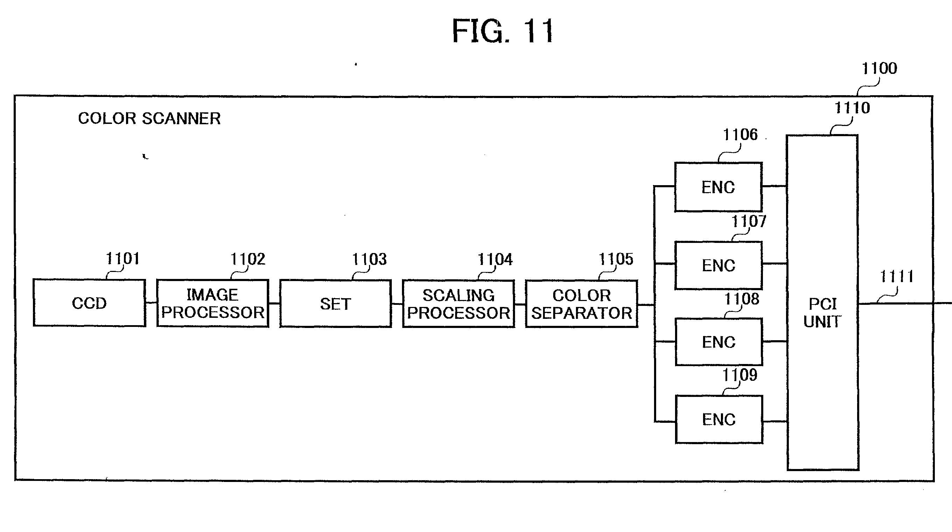

Fig. 11 shows a block diagram of an engine 1100 which can replace the engine 110 in Fig. 1. The engine 1100 is the engine of a color scanner and includes a CCD (charge-coupled device) 1101, an image processor 1102, an image shift processor (SFT) 1103, a scaling processor 1104, a color separator 1105, encoders (ENC) 1106 - 1109, a PCI (peripheral component interconnection) unit 1110, and a PCI (peripheral component interconnection) bus 1111. The CCD 1101 is a color CCD (charge-coupled device) capable of executing a simultaneous image capturing in three colors such as a red (R), a green (G), and a blue (B). The image processor 1102 converts an analog signal read with the CCD 1101 into a digital signal and executes the shading correction, the MTF correction, the ã (gamma) correction, and so on.

The SFT 1103 shifts and cuts an image and the scaling processor 1104 changes a scaling of an image. The color separator 1105 separates the R, G, and B colors into the Y, M, C, and BK colors. The ENCs 1106 - 1109 convert a multivalued image into a code. The PCI unit 1110 has a protocol executor (not shown) for executing the bus protocols and a DMAC (direct memory access controller) (not shown), and transfer's an image to the controller 101 (Fig. 1). Also, the PCI unit 1110 transmits the commands sent from the controller 101 to the components of the engine 1100.

Upon a receipt of a command from a host or an operator through the operation panel 111, the engine 1100 reads an image and transfers the data to either the MEM-C 107 or the MEM-P 104 of the controller 101. The controller 101 sends an image loaded through a network interface of the like to the operator.

Next, an exemplary flow of the image data read by the CCD 1101 is explained. The RGB image data read by the CCD 1101 is subjected to the conversion from the analog signal to the digital signal performed by the image processor 1102 and then to the MTF correction, the shading correction, and the ã (gamma) correction. Then, the SFT 1103 shifts and cuts an image. After that, the scaling processor 1104 changes the scaling of the image in accordance with a degree of the scaling or the resolution designated.

The color separator 1105 performs its operation in accordance with the command. That is, the color separator 1105 leave the RGB image data as it is when the read command is the RGB read command, but converts the RGB image into the YMCBK image data when the read command is the YMCBK read command. Then, the ENCs 1106 - 1109 execute the encoding the image data into codes if the coding is required by the command. After that, the image data are transferred to the PCI unit 1110. The DMACs of the PCI unit 1110 transfer the image data to the controller 101 through the PCI bus 1111 in accordance with the timing of the image data reading. It is noted that the controller 101 is configured to be able to receive the image data color by color.

As described above, to execute a high speed print with the CPU 102 of which interface is not opened to the public, the printer 100 uses the AGP 106 as the interface between the ASIC 108 and the NB 103 which is a part of the chip set specifically designed for the CPU 102.

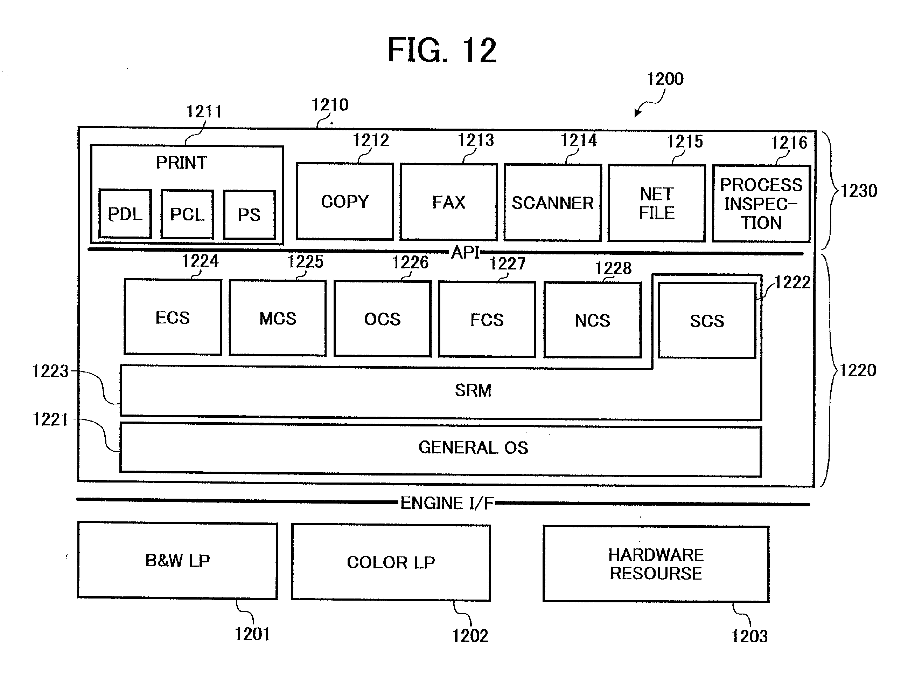

Referring to Fig. 12, a multi-function digital apparatus 1200 is explained. Fig. 12 shows a block diagram of the multi-function digital apparatus 1200 which includes a black and white line printer (B&W LP) 1201, a color line printer (color LP) 1202, other hardware resources 1203, and a set of software programs 1210. The set of software programs 1210 includes a platform layer 1220 and an application layer 1230.

The platform layer 1220 includes various control service modules that includes a system control service (SCS) 1222, an engine control service (ECN) 1224, a memory control service (MCS) 1225, an operation panel control service (OCS) 1226, a facsimile control service (FCS) 1227, and a network control service (NCS) 1228. The platform layer 1220 further includes a general operation system (OS) 1221 and a system resource manager (SRM) 1223. The platform layer 1220 is provided with an application program interface capable of receiving a request for data handling generated from the application layer 1230 with a predefined function. The platform layer 1220 interprets a request for data handling generated from the application layer 1230, and performs managements of the above mentioned control services that generate an allocation request for the hardware resource and of a control of a plurality of the hardware resources. The SRM 1223 performs an arbitration of competing requests for the hardware allocation.

The general OS 1221 uses UNIX, an open source general operating system, and executes the software programs included in the platform layer 1220 and the application layer 1230 in parallel. Since it is the open-source UNIX-based system, the programs are secured and networking is possible so that a source code can easily be obtained. In addition, royalties for the OS and TCP/IP are not needed and it facilitates outsourcing.

The SRM (system resource manager) 1223 performs the control of the system and management of the resources in collaboration with the SCS 1222. Specifically, the SRM 1223 performs an arbitration in accordance with requests sent from the components in upper layer which use the hardware resources such as an engine (i.e., a scanner and a plotter), a memory, a HDD file, and a host interface (i.e., a Centronics interface, a network interface, an IEEE1394 interface, an RS232C interface, etc.), and controls the execution thereof.

In more details, the SRM 1223 determines whether the requested hardware resource is not in use for other request and is presently usable and, if the requested hardware resource is determined as being presently usable, the SRM 1223 notifies the upper layer that the requested hardware resources are presently usable. The SRM 1223 may make a schedule of using the hardware resources against the requests (e.g., a sheet transfer and an image forming by the print engine, an allocation of the memory, a generation of a file, etc.) from the upper layer to execute the request.

The SCS (system control service) 1222 executes various tasks including an application management, a control of the operation panel 111, an indication on a system display (e.g., a job list screen, a counter indication screen, etc.), an indication on LEDs (light-emitting diodes), a resource management, and a control of application interruptions. In the application management, the SCS 1222 performs a registration of an application and notifies other registered applications of the registration newly performed. Further, the SCS 1222 notifies the newly registered application of the engine statuses in accordance with the system conditions and the application's requests. On the other hand, the SCS 1222 inquires the other registered applications whether they accept a transition of the system statuses such as changes of the power mode, the interruption mode, etc.

In the control of the operation panel 111, the SCS 1222 controls the exclusive rights of using the operation panel 111 by a granted application. The SCS 1222 exclusively notifies the granted application having the use rights of the operation panel 111 of key information provided by an operation panel driver of the OCS 1226. The key information has a masking function for tentatively stopping the notification in response to a system status transition such as an event of switching the applications.

In the indication on the system display, the SCS 1222 indicates various kinds of warning screens on the system display corresponding to the engine statuses in accordance with the requests from the granted application having the use rights of the operation panel 111. Some of these warning screens (e.g., a warning screen that restricts users) are turned on and off in accordance with the statuses of the granted application. Other than the engine statuses, the SCS 1222 controls the display of a job list that shows the statuses of a job reservation and a job progress and a counter screen indicative of the counts of various total counters. Also, the SCS 1222 controls the display of a screen indicative of en event that the SCS 1222 is busy in performing the notification. With respect to these system screen displays, the SCS 1222 does not request to release the rights of using the operation panel 111 and renders the system screen over the application screen.

In the indication on LEDs, the SCS 1222 controls the indications of various system LEDs such as warning LEDs and application keys. The LEDs pertinent to the granted application are controlled directly by the granted application with display drivers.

In the resource management, the SCS 1222 performs an exclusive control service for controlling the exclusive use of the engine resources (e.g., a scanner, a stapler, etc.) which are needed to be used on an exclusive basis during a job execution by an application.

In the control of application interruptions, the SCS 1222 performs a control service for giving a higher priority for treating the applications to a specific application than to other applications.

The ECS (engine control service) 1224 controls operations of the black and white line printer 1201, the color line printer 1202, and other hardware resources. For example, the ECS 1224 controls the operations of the image reading and the printing, the status notification, a sheet jam recovery, and so forth.

That is, the ECS 1224 sequentially generates and sends print requests to the SRM 1223 in accordance with a sequence designated by a job mode received from the application layer 1230 so as to perform a series of operations including the copying, the scanning, and the printing. The jobs that the ECS 1224 handles are predetermined as those in which the scanner is designated as an image input device or in which the plotter is designated as an image output device.

For example, the devices are designated in forms of "from scanner to plotter" for the copying operation, "from scanner to memory" for the filing operation, and "from scanner to FAX_OUT" for a facsimile transmission operation. Also, the devices are designated in forms of "from memory to plotter" for an operation for printing data stored in the memory or printing data sent from a printer application (PRINT) 1211 of the application layer 1230 and "from FAX_IN to plotter" for a facsimile receiving operation.

Although the term job is not necessarily be defined in the same way among the applications, it is defined in this example as an operation for treating a set of images that the user handles. For example, a job in an ADF (automatic document feed) mode of the copying operation for consecutively reading a plurality of originals is defined as an operation for consecutively reading a set of originals placed on an input sheet tray of an ADF unit (not shown). On the other hand, a job in a book reading mode using a contact glass for reading an original sheet by sheet is defined as an operation for consecutively reading originals until the last original is placed on the contact glass and is read. Likewise, for a copy application (COPY) 1212 of the application layer 1230, a job is defied as an operation for copying a stack of originals. For a facsimile application (FAX) 1213 of the application layer 1230, a job is defined as an operation for transmitting or receiving a set of document. For the printer application 1211, a job is defined as an operation for printing a set of document.

The MCS (memory control service) 1225 controls the memories. More specifically, the MCS 1225 performs acquisition and release of the memory, utilization of a hard disk, and compression and decompression of image data. The MCS 1225 performs various functions for managing requisite information as an image data file stored in the hard disk. Such functions include a file access, a file property management, a file editing, a file sorting, a notification of the entire file information, a failure recovery, and an automatic file deletion. The file access performs a file generation, a file deletion, a file open, a file close, and it includes an exclusive operation. The file property management manages various file properties including a file name, an ID (identification) of a file and a user, a password, a time at which a file is stored, a number of pages of a file, a data format (e.g., a compression method) of a file, an access restriction, an application used, conditions for print. In this file property management, a file is handled as image data in a physical page unit. The file editing performs a linking of files, an insertion of a file, and a cut of a file in a page unit or a file unit. The file sorting performs a plurality of files in a time order, a user ID order, etc. The notification of the entire file information is used to display a file list for a file search, for example. The failure recovery abandons data in a file or page unit when it is damaged, for example.

In addition, the MCS 1225 performs various operations associated to a storage and an access of image data relative to a RAM (random access memory). For example, the MCS 1225 obtains band property information of a file and a page from the application layer 1230. For another example, the MCS 1225 acquires and releases an image data region from the application layer 1230, and reads and writes data relative to such image data region.

The OCS (operation panel control service) 1226 is a module for controlling the operation panel to notify an event of an operator's key manipulation to the main controller, performing an operation for providing each application with library functions for establishing a GUI (graphic user interface), managing the GUI information from application to application, and indicating on the display and/or the LEDs of the operation panel to reflect the operation performed.

The OCS 1226 has various functions including a function for providing the library to establish the GUI, a management of the hardware resources associated with the operation panel, a VRAM (video random access memory) rendering and an LCD (liquid crystal display) displaying (e.g., a hardware display, a switching of the application on display, a switching of the language on display, a display of a window in dark, a blink display of a message and an icon, and a display of connected massages), a detection of a key input, a detection of an input through a touch-sensor panel, an outputting on the LEDs, and outputting on a beeper.

The FCS (facsimile control service) 1227 provides APIs (application program interfaces) for performing a facsimile operation for transmitting and receiving facsimile data from the application layer 1230 using a PSTN (public switched telephone network) and an ISDN (integrated services digital network), a registration and a retrieval of various kinds of facsimile data registered in a BKM (backup static random access memory), a facsimile reading, a printing of a facsimile message received, and a transmitting and receiving hybrid facsimile operation.

More specifically, the operations performed by the FCS 1227 includes a transmission operation for transmitting a document requested for transmission by the application layer 1230 to a destination facsimile machine using the PSTN or ISDN, and a receiving operation for receiving a facsimile image or various kinds of report or document through the PSTN or the ISDN and transferring it to the application layer 1230 to perform printing. The operations further includes an information retrieval and registration for retrieving or registering various kinds of facsimile user and group information stored in a memory of a facsimile board in a form of a telephone list. The operations further includes a facsimile log notification for notifying an application of requisite transmission and receiving results stored in the BKM mounted on the facsimile board. The operations further includes an event notification for notifying the applications registered in the FCS 1227 of an event which status is changed when the status of the facsimile board is changed.

The NCS (network control service) 1228 includes a plurality of modules for providing services usable by the applications operating through the network I/O. The NCS 1228 transfers the data received through the protocols from the network side to each application and interfaces to the network side when the applications transmit data to the network side. More specifically, the NCS 1228 performs various server demons including a ftpd, a httpd, a lpd, a snmpd, a telnetd, a smtopd, etc., and also performs a client function using the protocols of the same.

The application layer 1230 includes, as partly described above, the printer application (PRINT) 1211 for the document printing, the copy application (COPY) 1212 for the document copying, the facsimile application (FAX) 1213 for the facsimile transmission and receiving, a scanner application 1214 for the data scanning, a net file 1215 for a net file application, and a process inspection 1216 for a process inspection application. The printer application 1211 includes language modules of a PDL (page description language), a PCL (printer control language), and a PS (postscript). In each of the applications 1211 - 1216, a main player is a display indication control program for controlling the screen, the key manipulation, and a job generation in order to conduct the operation using each process implemented in the platform layer 1220. It is noted that an application on the network can be usable through the NCS 1228. Also, each application installed in the application layer 1230 can be added or deleted on an independent basis.

In this way, the multi-function digital apparatus 1200 of Fig. 12 is different from either a conventional multiple function machine that employs a plurality of controller boards for the respective functions such as the printer, the copying, the facsimile, and so on, or another conventional multiple function machine that activates the printer application, the copy application, the facsimile application, and the like merely on the common OS. That is, the multi-function digital apparatus 1200 causes the platform layer 1220 to execute the processes commonly needed by the applications so as to improve the total productivity. At the same time, this also improves the efficiency of the application development.

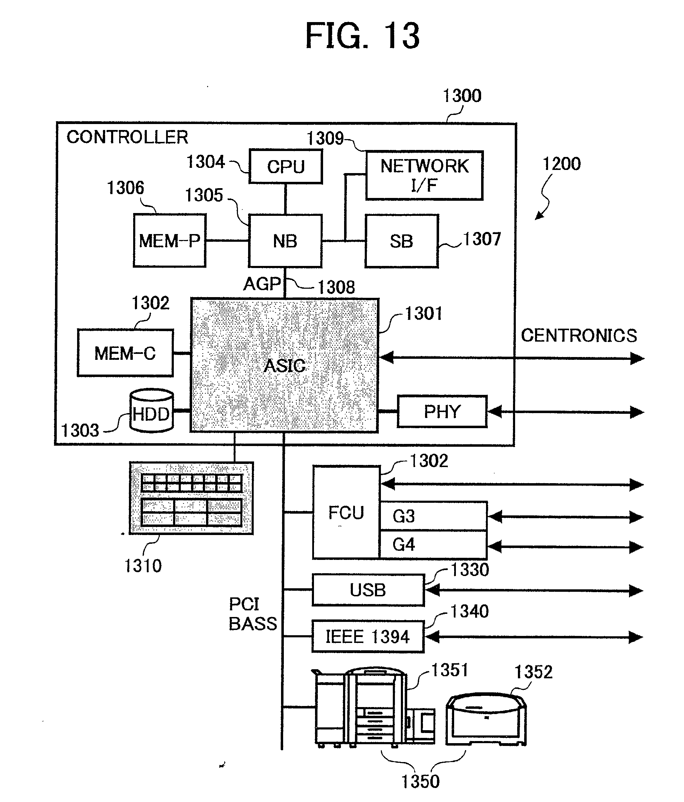

Next, an exemplary hardware configuration of the multi-function digital apparatus 1200 is explained with reference to Fig. 13. As shown in Fig. 13, the multi-function digital apparatus 1200 includes a controller 1300, an operation panel 1310, a FCU (facsimile control unit) 1320, a USB (universal serial bus) interface 1330, an IEEE-1394 (Institute of Electrical and Electronics Engineers) interface 1340, and an engine unit 1350. These components are connected to each other with the PCI bus or the like.

The controller 1300 includes an ASIC (application-specific integrated circuit) 1301, a MEM-C 1302, a HDD 1303, a CPU (central processing unit) 1304, an NB (north bridge) 1305, a MEM-P 1306, a SB (south bridge) 1307, an AGP (accelerated graphics port) 1308, and a network interface 1309. The controller 1300 has the configuration similar to that of the controller 101 shown in Fig. 1 by the reason that the interface of the CPU 1304 is not opened to the public as is the case with the controller 101.

In this configuration, the ASIC 1301 and the NB 1305 is not merely connected with the PCI bus but is connected with the AGP 1308. The reason for this is that the PCI bus is not sufficiently fast to execute the plurality of processes that form the platform layer 1220 and the application layer 1230.

The CPU 1304 controls the entire operations of the multi-function digital apparatus 1200. Specifically, the CPU 1304 gets the function modules of the platform layer 1220 on the general OS 1221 started and executed as the processes. The function modules are the SCS 1222, the SRM 1223, the ECS 1224, the MCS 1225, the OCS 1226, the FCS 1227, and the NCS 1228 which form. The CPU 1304 also gets the applications modules of the application layer 1230 started and executed as the processes. The application modules are the printer application 1211, the copy application 1212, the facsimile application 1213, the scanner application 1214, the net-file application 1215, and the process inspection 1216.

The NB 1305 is a bridge for connecting the CPU 1304 to the MEM-P 1306, the SB 1307, and the ASIC 1301. The MEM-P 1306 is a system memory including a memory for storing data for rendering an image. The SB 1307 is a bridge for connection the NB 1305 to the ROM, The PCI devices, and other peripheral devices.

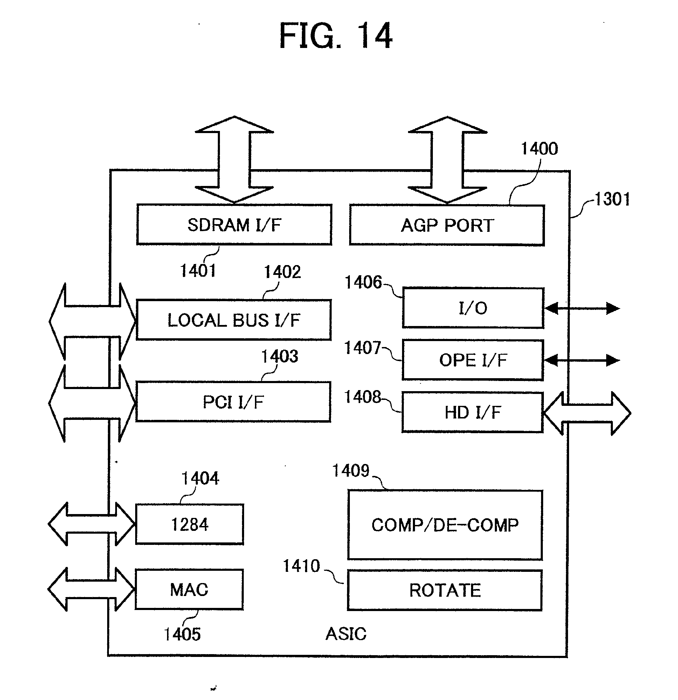

The MEM-C 1302 is a local memory uses as a copy image buffer, an encode buffer, and so forth. The ASIC 1301 is an application-specific integrated circuit that includes a set of hardware for implementing the image processing operation. More specifically, as shown in Fig. 14, the ASIC 1301 includes an AGP port 1400, an SDRAM I/F 1401, a local bus I/F 1402, a PCI I/F 1403, a 1284 I/F 1404, a MAC I/F 1405, an I/O I/F 1406, an OPE I/F 1407, a HD I/F 1408, a comp/de-comp I/F 1409, and a rotate I/F 1410. Through the AGP port 1400, the ASIC 1301 is connected with the NB 1305, a part of the specific chip set for the CPU 1304. Other than this, the ASIC 1301 is configured in a manner similar to the ASIC 108 shown in Fig. 2.

The HDD 1303 is a storage for storing image data, programs, font data, form data, etc. The operation panel 1310 allows an operator input and indicates an operator guidance.

The ASIC 1301 is provided with a RAM interface 1407 (see Fig. 14) for connecting the MEM-C 1302 and a HDD interface 1408 (see Fig. 14) for connecting the HDD 1303, and switches between the RAM and HDD interfaces when conducting a read/write operation relative to the MEM-C 1302 or the HDD 1303. If it is intended to display an image on a screen merely at a high speed as in the case of the graphic board, the switching to the hard disk may not be needed. However, the multi-function digital apparatus 1200 allows the variety of the applications from the copy function to the net file function to operate in considerably different data flows and therefore the multi-function digital apparatus 1200 needs to switch the memory interfaces, as described above.

The AGP 1308 is a bus interface for performing a high speed graphic operation with a graphic accelerator card and which directly accesses at a high throughput to the system memory so as to improve the processing speed of the graphic accelerator card, as described in the description of the AGP 106 of the printer 100 of Fig. 1.

The AGP 108 is used as an interface between the NB 1305 and the ASIC 1301 although the AGP 1308 is originally designed for a use in smoothly displaying a three-dimensional image. That is, since the multi-function digital apparatus 1200 is configured to load the CPU 1304 with the variety of the applications in the interface of the CPU 102 is not opened to the public, the AGP 1308 is applied instead of the PCI bus which may reduce the total performance of the apparatus.

The ASIC 1301 controls the switching of the image data in three patterns. In a first pattern, the image data scanned by a scanner 1352 of the engine unit 1350 is transferred to a plotter 1351 of the engine unit 1350. In a second pattern, the image data scanned by the scanner 1352 is transferred to the AGP 1308. In a third patter, the image data input through the AGP 1308 is transferred to the plotter 1351.

The second pattern is used when the multi-function digital apparatus 1200 executes a PC FAX application or the net file application or when the CPU 1304 conducts the image processing operation, and is to output the scanner image data input through the PCI bus to the AGP 1308. The third patter is used when the multi-function digital apparatus 1200 performs the printer function, and is to output the image data input through the AGP 1308 to the PCI bus.

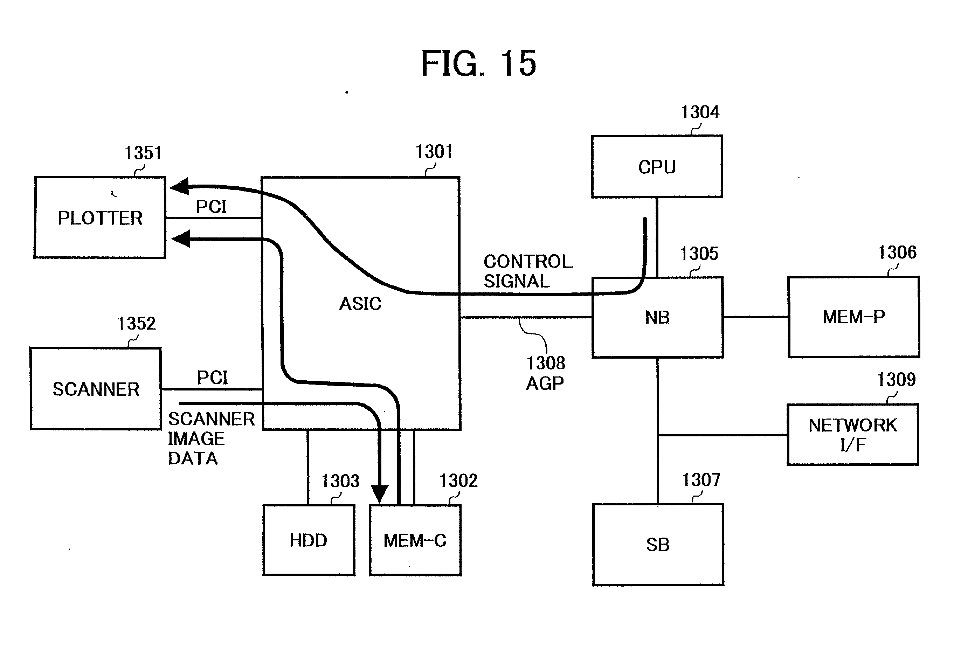

Fig. 15 shows the image data flow in the first pattern. As indicated in Fig. 15, in the first pattern, the multi-function digital apparatus 1200 operates the copy function in which the scanner image data input through the PCI bus is transferred to the plotter through the PCI bus.

More specifically, the scanner image data scanned by the scanner 1352 is transferred to the ASIC 1301. Then, the ASIC 1301 arranges a temporary storage of the scanner image data into the MEM-C 1302 through the memory interface. After that, the scanner image data is transferred to the plotter 1351 through the PCI bus and is output on a recording sheet by the plotter 1351. In this case, the scanner image data is not caused to pass through the AGP 1308 but, when the printing is performed, a control signal such as a paper feed is sent from the CPU 1304 though the AGP 1308.

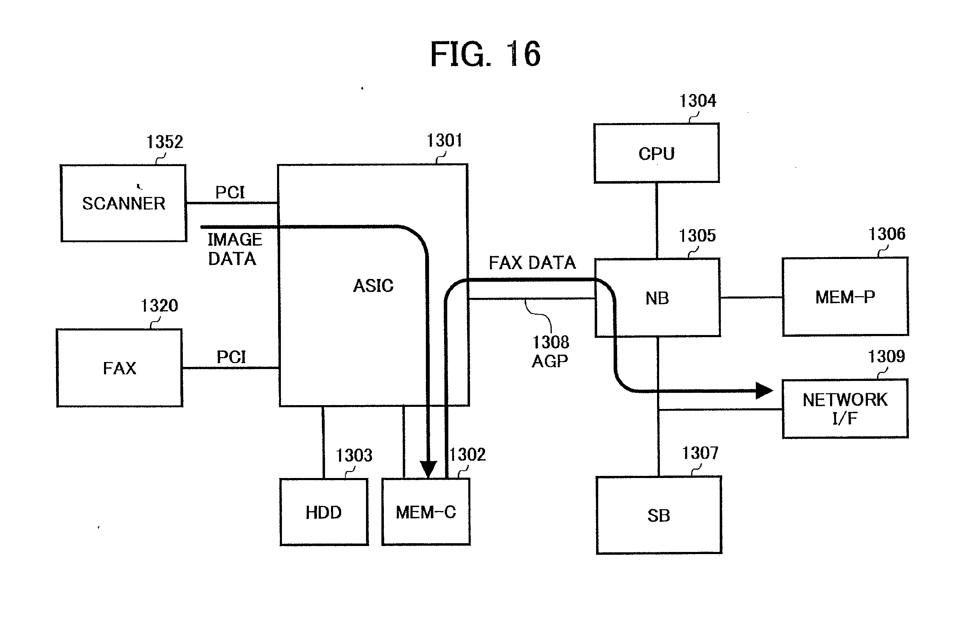

Fig. 16 shows the image data flow in the second pattern. As indicated in Fig. 16, in the first pattern, the multi-function digital apparatus 1200 operates the PC-FAX function. The facsimile unit (FCU) 1320 is physically located at the engine unit 1350 side. Therefore, in the general facsimile operation, the image data is output to the FCU 1320 through the PCI bus but is not output to the AGP 1308.

However, the PC-FAX directly transmits the facsimile data to a destination PC through the network interface 1309. In this case, the scanner image data scanned by the scanner 1352 is compressed and encoded into FAX data by the ASIC 1301 in accordance with the facsimile procedure. Then, the FAX data is transferred through the AGP 1308 and the NB 1305 to the network interface 1309.

When the scanner image data is subjected to a scanner data processing operation, the scanned image data is temporarily stored in the MEM-C 1302 and the image data is not transferred to the AGP 1308. But, when the scanner 1352 is used as a network scanner by a computer on the network, the scanner image data scanned by the scanner 1352 is transmitted to the computer on the network through the network interface 1309.

When the data transfer is performed by the net file application, the scanner image data scanned by the scanner 1352 is temporarily stored in the HDD 1303 and, when the stored image data is demanded by a computer on the network, the image data is transmitted from the HDD 1303 to the computer on the network through the ASIC 1301, the AGP 1308, the NB 1305, and the network interface 1309.

In the above-described second pattern, the reason for the temporary storage of the scanner image data in the MEM-C 1302 or the HDD 1303 is mainly to make it possible to adjust the data transmission rate of the PCI interface and the AGP interface.

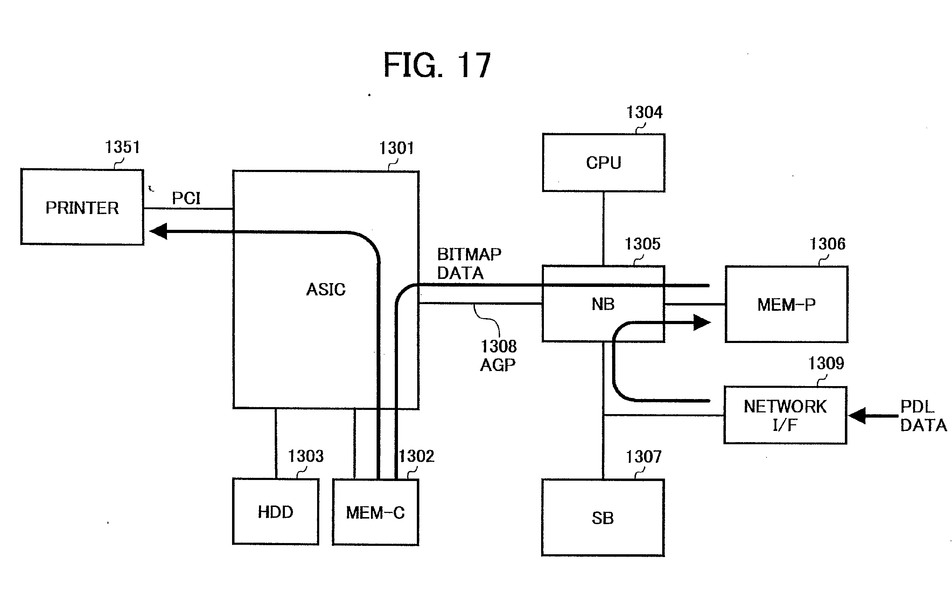

Fig. 17 shows the image data flow in the third pattern. When the multi-function digital apparatus 1200 performs the print function, it receives the print data described in the PDL through the network interface 1309, as shown in Fig. 17. Then, the PDL data is expanded to bit-mapped image data on the MEM-P 1306 and the bit-mapped image data is then input to the ASIC 1301 through the NB 1305 and the AGP 1308. After that, the bit-mapped image data is temporarily stored in the MEM-C 1302 and is output from the MEM-C 1302 through the PCI bus. At this time, a control signal such as the paper feed can be transmitted from the CPU 1304 to the plotter 1351.

When the image data is temporarily stored in the MEM-C 1302 or the HDD 1303, the image data can be reversible compressed. Then, the reversible compressed image data can be later decompressed to read out from the MEM-C 1302 or the HDD 1303. Thereby, the size of the image data can be reduced so that the MEM-C 1302 and the HDD 1303 can stored more image data.

The relationships of the memory maps among the CPU 1304, the ASIC 1301 and so on are similar to those explained with reference to Fig. 5 and therefore the repetitive description is omitted.

As described above, the multi-function digital apparatus 1200 has the CPU 1304 configured to get started and executes the plurality of processes that form the platform layer 1220 and the application layer 1230, which are the'base of the apparatus 1200, and therefore achieves a high performance even though the interface of the CPU 1304 is not opened to the public.

In the above-described example of the multi-function digital apparatus 1200, the platform layer 1220 is formed with the SCS 1222, the SRM 1223, the ECS 1224, the MCS 1225, the OCS 1226, the FCS 1227, and the NCS 1228 and the application layer 1230 is formed with the printer application 1211, the copy application 1212, the facsimile application 1213, the scanner application 1214, the net file application 1215, and the process inspection 1216. However, the present invention is not limited to these software components and other software components can be implemented into the platform layer 1220 and the application layer 1230.

The above disclosure may be conveniently implemented using a conventional general purpose digital computer programmed according to the teaching of the present specification, as will be apparent to those skilled in the computer art. Appropriate software coding can readily be prepared by skilled programmers based on the teachings of the present disclosure, as will be apparent to those skilled in the software art. The above disclosure may also be implemented by the preparation of application specific integrated circuits or by interconnecting an appropriate network of conventional component circuits, as will be readily apparent to those skilled in the art.

Numerous additional modifications and variations are possible in light of the above teachings. It is therefore to be understood that within the scope of the appended claims, the disclosure of this patent specification may be practiced otherwise than as specifically described herein.

This paten specification is based on Japanese patent applications, No. 2001-232625 filed on July 31, 2001, in the Japanese Patent Office, the entire contents of which are incorporated by reference herein.

## Claims

1. An integrated circuit for image data processing, comprising:
an engine interface configured to interface with an engine which includes a scanner and an image forming device;
a chip set interface configured to interface with a chip set of a CPU; and
a data flow controller configured to select one of a first data flow in which scanner image data scanned by said scanner and which is input through said engine interface is output as print data to said engine interface, a second data flow in which said scanner image data is output to said chip set interface, and a third data flow in which image data input through said chip set interface is output as print data to said engine interface.

2. An integrated circuit as defined in Claim 1, further comprising a memory interface configured to interface with a memory for storing image data, wherein said data flow controller outputs image data input through one of said engine interface and said chip set interface to said memory interface and, after that, said data flow controller reads said image data through said memory interface and outputs said read image data to one of said engine interface and said chip set interface.

3. An integrated circuit as defined in Claim 2, wherein said memory interface includes a RAM interface and a hard disk interface, and said data flow controller uses one of said RAM interface and the hard disk interface when performing an input and output of image data through said memory interface.

4. An integrated circuit as defined in Claim 3, further comprising a reversible data compressor and de-compressor configured to perform a reversible data compression and de-compression relative to image data, wherein said reversible data compressor and de-compressor compresses image data when said image data is output through said memory interface and de-compresses compressed image data when said compressed image data is input through said memory interface.

5. An integrated circuit as defined in Claim 1, 2, 3 or 4 wherein said chip set interface is an accelerated graphic port and said accelerated graphic port is connected to a north bridge of said chip set of said CPU.

6. An integrated circuit as defined in Claim 1,2, 3, 4 or 5 wherein said engine interface is a PCI interface including a PCI bus and said PCI bus is connected to said engine.

7. An integrated circuit as defined in Claim 1, 2, 3, 4, 5 or 6 wherein said engine is one of a black and white plotter, a one-drum color plotter, a four-drum color plotter, a copy engine, and a facsimile engine, each of which includes a PCI interface.

8. An image forming apparatus, comprising:
an engine including a scanner and an image forming device;
a CPU;
a controller configured to be connected to said engine and said CPU and comprising an integrated circuit for image data processing according to any one of claims 1 to 7.

9. An image data processing method, comprising the steps of:
providing an engine interface for interfacing an engine which includes a scanner and an image forming device;
providing a chip set interface for interfacing a chip set of a CPU; and
providing a controller for selecting one of a first data flow in which scanner image data scanned by said scanner and which is input through said engine interface is output as print data to said engine interface, a second data flow in which said scanner image data is output to said chip set interface, and a third data flow in which image data input through said chip set interface is output as print data to said engine interface.

10. An image data processing method as defined in Claim 9, further comprising the steps of:
providing a memory interface for interfacing a memory for storing image data,
wherein image data input through one of said engine interface and said chip set interface is output to said memory interface, and said image data read through said memory interface is output to one of said engine interface and said chip set interface.

11. An image data processing method as defined in Claim 10, wherein said memory interface includes a RAM interface and a hard disk interface, and one of said RAM interface and said hard disk interface is used when image data is input or output through said memory interface.

12. An image data processing method as defined in Claim 11, further comprising the steps of:
providing a reversible data compressor and de-compressor configured to reversibly encode and compress image data when said image data is output through said memory interface and to decode and de-compress said compressed image data when said compressed image data is input through said memory interface.

13. An image data processing method as defined in Claim 9, 10, 11 or 12, wherein said chip set interface is an accelerated graphic port and said accelerated graphic port is connected to a north bridge of said chip set of said CPU.

14. An image data processing method as defined in Claim 9, 10, 11, 12 or 13, wherein said engine interface is a PCI interface including a PCI bus and said PCI bus is connected to said engine.

15. An image data processing method as defined in Claim 9, 10, 11, 12, 13 or 14, wherein said engine is one of a black and white plotter, a one-drum color plotter, a four-drum color plotter, a copy engine, and a facsimile engine, each of which includes a PCI interface.

16. An image forming method, comprising the steps of:
interfacing an engine which includes a scanner and an image forming device with an engine interface; and
processing data according to the method of any one of claims 9 to 15.
